# FASCICULE DE BREVET EUROPEEN

(11) **EP 2 089 246 B1**
(45) Date de publication et mention de la délivrance du brevet: **24.02.2010**
(21) Numéro de dépôt: 07858697.1
(22) Date de dépôt: 14.11.2007
(51) Int. Cl.: B60J 5/10

(54) **OUVRANT DE VEHICULE AUTOMOBILE COMPRENANT UNE ZONE FRAGILE**
ÖFFNUNGSPLATTE EINES KRAFTFAHRZEUGES MIT VERDÜNNTEM BEREICH
MOTOR VEHICLE OPENING PANEL COMPRISING A WEAKENED REGION

(30) Priorité: 15.11.2006 FR 0609988
(43) Date de publication de la demande: 19.08.2009
(73) Titulaire: Inoplast, 07100 Annonay (FR)
(72) Inventeur: MARTIN, Laurent, 07340 Peaugres (FR)
(74) Mandataire: Remy, Vincent Noel Paul
(86) Numéro de dépôt international: PCT/FR2007/052341
(87) Numéro de publication internationale: WO 2008/059174

(56) Documents cités:
- DE-A1- 2 238 676
- DE-A1- 3 438 356
- DE-A1- 10 340 954
- JP-A- 2003 311 856
- JP-A- 2006 224 876

## Description

La présente invention concerne un ouvrant de véhicule automobile comprenant une zone fragile.

Un ouvrant de véhicule automobile, tel qu'un couvre-capote, une porte de coffre, un hayon arrière ou un capot, comporte généralement des moyens de solidarisation à la caisse en blanc (ou structure) du véhicule, notamment des charnières, permettant la mobilité de l'ouvrant par rapport à la caisse en blanc.

On sait qu'un tel ouvrant est habituellement exposé lors d'un choc, si bien qu'il transmet de l'énergie aux charnières assurant la solidarisation de l'ouvrant à la caisse. Ces charnières sont alors susceptibles d'être endommagées et de ce fait, d'endommager la caisse en blanc.

Cette configuration n'est pas idéale car les frais de réparation du véhicule automobile sont très élevés dès que la caisse en blanc, formant la structure du véhicule, est détériorée.

Pour éviter que la caisse en blanc soit endommagée consécutivement à un choc, on connaît, dans l'état de la technique, une porte de coffre conformée de sorte qu'elle comprend à son extrémité supérieure, au voisinage des emplacements prévus pour l'attache des charnières, une « zone fragilé » s'étendant sur toute la dimension transversale de la porte de coffre. On désigne par dimension transversale de la porte de coffre la dimension s'étendant selon la direction correspondant à la direction transversale du véhicule automobile lorsque la porte de coffre est montée sur le véhicule automobile.

Par « zone fragile », on entend que les propriétés mécaniques de la porte de coffre dans cette zone, notamment sa résistance mécanique, sont inférieures aux propriétés mécaniques du reste de la porte de coffre. Cette zone est conformée généralement de sorte que les contraintes subies par la porte de coffre consécutivement à un choc arrière entraînent la formation d'une pliure transversale de la porte de coffre à l'emplacement de la zone fragile, cette pliure intervenant avant que la caisse soit endommagée. La formation de cette pliure permet de diminuer subitement la raideur de la porte de coffre face au choc et de réduire ainsi la transmission des efforts aux charnières, pour préserver la caisse en blanc du véhicule.

Dans l'état de la technique, comme JP 2006-224876 ou DE 103 40 954 A1, la zone fragile est obtenue en diminuant l'épaisseur de l'ouvrant à l'emplacement où l'on veut prévoir cette zone. La diminution d'épaisseur peut être réalisée par usinage et/ou par moulage à l'aide d'un moule de forme spécifique présentant une sous-épaisseur, lorsque l'ouvrant est réalisé en matière plastique.

Ainsi, la fabrication d'un ouvrant comportant cette zone fragile nécessite la mise en oeuvre d'une opération spécifique et/ou la conception d'un moule spécifique. Ces modes de fabrication entraînent des coûts supplémentaires de production, qui sont non négligeables. Ils engendrent également des risques de non-qualité en terme d'aspect de l'ouvrant et/ou des risques de fragilité de l'ouvrant.

La présente invention vise à remédier à ces inconvénients.

Elle a pour objet un ouvrant de véhicule automobile en matière plastique moulée; comprenant des moyens de solidarisation de l'ouvrant à une caisse en blanc du véhicule automobile permettant la rotation de l'ouvrant autour d'un axe géométrique transversal donné, l'ouvrant comprenant une zone dite fragile, apte à se rompre plus facilement que le reste de' l'ouvrant, cette zone s'étendant essentiellement sur toute la dimension transversale de l'ouvrant, au moins partiellement dans une direction sensiblement parallèle à l'axe géométrique, **caractérisé en ce que** la zone fragile est constituée par une jonction de deux fronts de matière issus de deux sources de matière plastique distinctes.

On entend par « dimension transversale de l'ouvrant » la dimension s'étendant selon la direction correspondant à la direction transversale du véhicule automobile lorsque l'ouvrant est monté sur le véhicule automobile.

Ainsi, au lieu de calculer, lors du moulage, la trajectoire de la matière de sorte que la jonction ne soit pas située dans une zone de l'ouvrant sollicitée mécaniquement, comme c'est habituellement le cas dans ce domaine, les inventeurs à la base de l'invention ont eu l'idée de tirer profit des propriétés mécaniques spécifiques de la matière plastique à l'endroit de la jonction pour former la zone fragile de l'ouvrant, idéalement située pour épargner les charnières (permettant la solidarisation de l'ouvrant à la caisse) lors d'un choc.

Cette zone fragile est formée, grâce à l'invention, de façon économique et à partir d'un mode de fabrication parfaitement maîtrisé. Elle ne nécessite donc pas la mise en oeuvre d'étapes spécifiques ou l'utilisation d'outils spécifiques et n'engendre pas de difficultés spécifiques à ce mode de fabrication.

Lorsque le véhicule automobile subit un choc important, notamment lors d'une collision en marche avec un autre véhicule, la zone fragile (ou zone de recollement de matière), plus fragile, se ruine et la transmission des efforts aux charnières est réduite. Ainsi, on diminue le risque d'endommager la caisse en blanc. Toutefois, lors d'un choc moins important, notamment un choc statique (petit choc) ou un impact à vitesse réduite, la zone fragile reste suffisamment rigide pour ne pas se rompre et éviter ainsi le remplacement de l'ouvrant.

En outre, la rupture de la zone fragile permet d'éviter que l'ouvrant ne se détache des charnières et vienne alors percuter un occupant du véhicule automobile ou un piéton situé au voisinage du lieu de la collision. Ainsi, l'ouvrant selon l'invention permet d'améliorer la sécurité des personnes sur le lieu de la collision, en limitant les risques de blessure liées aux ouvrants.

Optionnellement, au moins une source de matière plastique est une alimentation d'injection ou un flanc de matière (ou pan de matière) compressé.

Avantageusement, l'ouvrant est réalisé en matière plastique renforcée de fibres.

Dans ce cas, la différence entre les propriétés mécaniques d'ensemble de l'ouvrant et celles de la zone fragile est amplifiée. En effet, dans les parties de l'ouvrant issues d'une même source de matière plastique (par exemple d'un même flanc de matière), les fibres de renfort du matériau sont réparties et entremêlées selon toutes les directions, ce qui apporte une rigidité supplémentaire homogène à l'ouvrant. Or, dans la zone fragile correspondant à la jonction de deux fronts de matière, les deux fronts de matière se mélangent peu et ainsi peu de fibres s'entremêlent dans cette zone. La résistance mécanique supplémentaire apportée par les fibres dans cette zone est donc très limitée.

Optionnellement, la matière injectée est du BMC (Bulk Moulding Compound) ou du Polypropylène (PP) chargé de fibres et/ou la matière compressée est du SMC (Sheet Moulding Compound) ou du TRE (Thermoplastique Renforce Estampable).

Il est également possible que l'ouvrant soit bi-matière, avec une partie moulée (notamment par injection de BMC) et une autre partie moulée (notamment par compression de SMC).

Dans un premier mode de réalisation, la zone fragile s'étend dans la direction sensiblement parallèle à l'axe géométrique essentiellement sur toute la dimension transversale de l'ouvrant.

Dans un deuxième mode de réalisation, la zone fragile comprend au moins deux parties sensiblement rectilignes s'étendant dans deux directions formant un angle de valeur prédéterminée entre elles.

Dans ce cas, la zone fragile peut plus particulièrement comprendre :
- une partie centrale, s'étendant dans la direction sensiblement parallèle à l'axe géométrique ;
- deux parties latérales, agencées de sorte que la concavité de la zone fragile soit tournée vers les moyens de solidarisation.

Par « concavité », on entend le côté de la zone fragile dans lequel les angles entre les différentes parties de la zone fragile sont inférieurs à 180°.

Cette configuration permet en effet de mieux prendre en compte les chocs avant ou arrière latéraux qui pourraient se produire au niveau de l'ouvrant du véhicule automobile.

Dans un premier mode de mise en oeuvre, l'ouvrant constitue un couvre-capote.

Dans un deuxième mode de mise en oeuvre, l'ouvrant constitue une porte de coffre.

Dans un troisième mode de mise en oeuvre, l'ouvrant constitue un hayon.

Dans un quatrième mode de mise en oeuvre, l'ouvrant constitue un capot, en particulier un capot adapté pour absorber l'énergie due à un choc piétons.

Un capot pour choc piétons est en effet particulièrement rigide selon la direction longitudinale du véhicule et présente donc plus de risques de se détacher des charnières et/ou d'endommager la caisse suite à un choc frontal.

L'invention a également pour objet un procédé de fabrication d'un ouvrant de véhicule automobile tel que défini ci-dessus, destiné à comporter des moyens de solidarisation permettant la rotation de l'ouvrant autour d'un axe géométrique donné, le procédé comportant :
- une étape d'insertion dans un moule de deux flancs de matière de forme prédéfinie ;
- une étape de compression du moule de sorte que les flancs de matière fluent,
- une étape de jonction des deux flancs de matière liquide au moins partiellement dans une direction sensiblement parallèle à l'axe géométrique

L'invention sera mieux comprise à la lecture de la description qui va suivre, donnée uniquement à titre d'exemple et faite en se référant aux dessins dans lesquels :
- la figure 1 est un schéma en perspective d'un hayon arrière de véhicule automobile formant un ouvrant selon l'invention ;
- les figures 2 et 2bis représentent une coupe transversale d'un hayon selon l'invention, respectivement avant et après qu'un choc arrière se soit produit ;
- les figures 3, 4 et 5 représentent les différentes étapes du procédé selon l'invention.

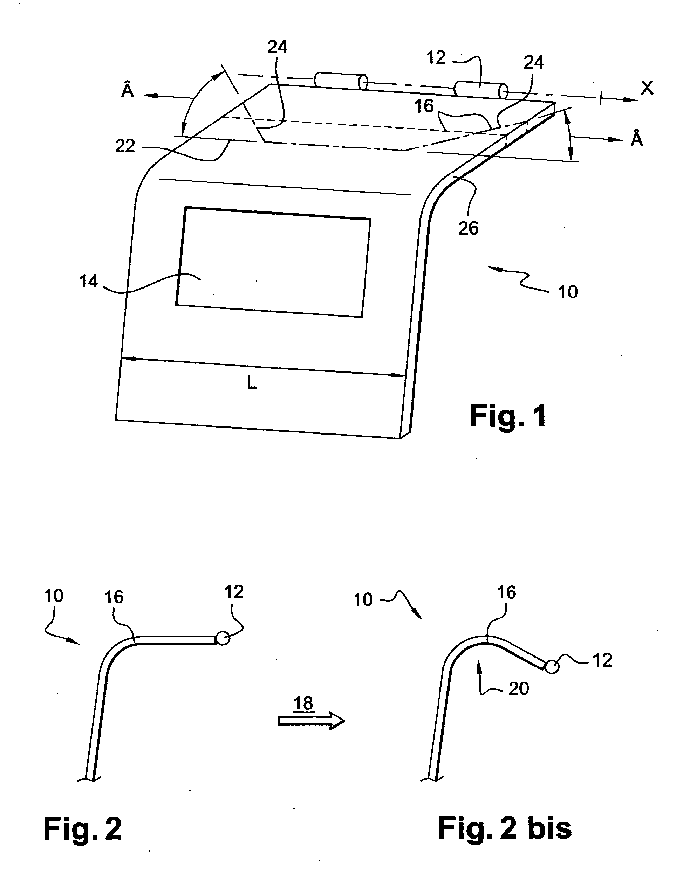

On a représenté sur la figure 1 un hayon arrière 10 comprenant des moyens de solidarisation 12 à la caisse en blanc du véhicule automobile, aptes à coopérer avec des moyens complémentaires (non représentés) de la caisse en blanc. Les moyens 12 et les moyens complémentaires forment des charnières permettant un mouvement de rotation du hayon autour de l'axe géométrique X. Le hayon comprend également un orifice 14 destiné à accueillir un vitrage arrière.

Le hayon 10 comprend à son extrémité supérieure, au voisinage des emplacements des moyens de solidarisation 12, une zone fragile 16 s'étendant sur toute la dimension transversale du hayon, correspondant à la dimension du hayon 10 s'étendant selon la direction transversale du véhicule automobile lorsque le hayon est monté sur le véhicule. Les propriétés mécaniques du hayon 10 dans la zone fragile 16, notamment sa résistance mécanique, sont inférieures aux propriétés mécaniques du reste du hayon 10. Cette zone est donc apte à se rompre plus facilement que le reste de l'ouvrant.

La zone fragile 16 peut être conformée, comme représenté en pointillés sur la figure 1, pour s'étendre dans une direction sensiblement parallèle à l'axe géométrique X essentiellement sur toute la dimension transversale L du hayon 10.

Ainsi, en cas de choc arrière, comme cela est représenté sur la figure 2bis, les efforts engendrés par le choc (représentés par la flèche 18) entraînent la ruine du hayon dans la zone fragile 16, spécialement conçue à cet effet, et la formation d'une pliure 20 du hayon à l'emplacement de cette zone 16. Cette pliure permet de limiter les efforts transmis aux charnières, pour préserver la caisse en blanc et éviter le détachement du hayon 10 du véhicule.

La zone fragile 16 peut également être conformée, comme représentée en trait mixte sur la figure 1, de sorte qu'elle comprend une partie centrale 22 s'étendant dans la direction sensiblement parallèle à l'axe géométrique X et deux parties latérales 24 formant respectivement un angle Â de valeur prédéterminée (environ 45° dans le mode de réalisation représenté) avec la partie centrale 22.

Ces parties latérales 24 s'étendent entre une extrémité de la partie centrale 22 et une paroi du hayon 26 correspondante et délimitant la dimension transversale du hayon. Elles sont agencées de sorte que la concavité de la zone fragile 16 soit tournée vers les moyens de solidarisation 12, c'est à dire vers l'habitacle du véhicule lorsque le hayon est monté sur le véhicule. Cette configuration de la zone fragile 16 permet de mieux prendre en compte les chocs arrière latéraux pouvant toucher le hayon 10.

Le hayon est réalisé en matière plastique moulée, notamment en matière renforcée de fibres telle que le SMC (Sheet Moulding Compound), ce matériau comprenant des fibres d'environ 25 mm de long.

La zone fragile 16 du hayon 10 est formée lors du moulage du hayon par la jonction de deux fronts de matière issus de deux sources de matière plastique distinctes. Les efforts liés au choc et entraînant la rupture de la zone fragile 16 du hayon selon l'invention sont trois à quatre fois inférieurs aux efforts nécessaires pour engendrer la rupture d'un hayon réalisé dans un même matériau et dépourvu de zone fragile.

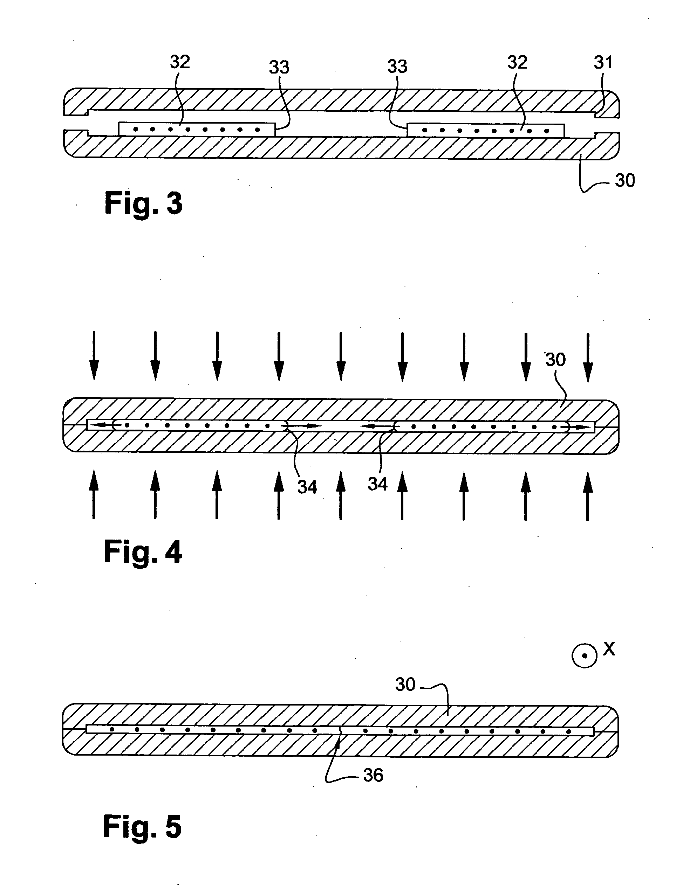

Un procédé pour obtenir un tel ouvrant est décrit dans la suite, à l'aide des figures 3 à 5. Sur les figures, on a représenté un moule 30 en deux parties destiné à la fabrication d'un ouvrant muni de moyens de solidarisation 12 à la caisse en blanc du véhicule. Ici, on désigne par 31 la partie du moule destinée au moulage d'un emplacement prédéfini au voisinage duquel les moyens de solidarisation sont destinés à être rapportés. Le moule est représenté en coupe, selon un plan ayant pour normale l'axe géométrique X.

Le procédé de fabrication d'un ouvrant selon l'invention comprend une première étape, représentée sur la figure 3, d'insertion de deux flancs 32 (ou pans) de matière plastique, par exemple de SMC, dans le moule 30 en deux parties, conformé pour obtenir l'ouvrant de la forme désirée.

Les flancs de matière 32 recouvrent par exemple 40% de la surface du moule (elles peuvent également recouvrir 80% de la surface du moule) et sont d'épaisseur assez importante. Certaines bordures 33 de ces flancs sont dirigées parallèlement à l'axe géométrique X.

Le procédé comprend ensuite une étape, représentée sur la figure 4, de compression du moule 30, après la fermeture de celui-ci. Les flancs de matière 32 fluent alors sous l'effet de cette compression et la matière liquide se répartit progressivement dans la totalité du moule 30.

Enfin, le procédé comprend une étape de jonction de deux fronts de matière 34 issus des bordures 33 des deux flancs de matière distincts, représentée à la figure 5. La jonction 36 constitue la zone fragile de l'ouvrant et s'étend sensiblement dans une direction sensiblement parallèle à l'axe géométrique X. On notera que les fibres de renfort de chaque flanc 32 s'entremêlent peu dans à la jonction 36, ce qui augmente la fragilité de l'ouvrant dans cette zone.

On contrôle la direction selon laquelle s'étend la jonction 36, cette direction étant déterminée par la direction des bordures 33 des flancs de matière 32. La matière s'écoule en effet dans le moule à une vitesse sensiblement égale et la jonction est donc sensiblement parallèle aux bordures 33 des deux flancs de matière 32.

On notera que l'invention ne se limite pas aux modes de réalisation précédemment décrits.

En effet, il est possible qu'il y ait plus d'une zone fragile et donc plus de deux flancs de matière. Une même zone fragile peut également être formée par trois flancs de matière ou plus.

En outre, la zone fragile 16 peut être également constituée par la jonction de deux fronts de matière injectés (notamment du BMC ou du PP chargé), par exemple en nappe, à l'aide d'alimentations d'injection situées de part et d'autre du moule 30.

La zone fragile 16 peut également ne pas être rectiligne mais courbe. Elle peut également présenter des irrégularités minimes dues à la fabrication : elle peut par exemple serpenter dans une plage de quelques centimètres autour de la direction rectiligne dans laquelle elle s'étend généralement. En outre, elle peut comprendre une unique partie (ou une partie centrale) légèrement inclinée par rapport à l'axe géométrique, cette inclinaison n'empêchant pas la rupture de la zone fragile en cas de choc arrière.

En outre, les matériaux utilisés peuvent différer des matériaux décrits ci-dessus : on peut notamment utiliser du TRE (Thermoplastique Renforce Estampable). La matière plastique peut notamment être dépourvue de fibres de renfort.

Enfin, l'ouvrant peut être également un couvre-capote, une porte de coffre ou un capot, notamment adapté pour le choc piéton.

## Revendications

1. Ouvrant (10) de véhicule automobile en matière plastique moulée, comprenant des moyens de solidarisation (12) de l'ouvrant (10) à une caisse en blanc du véhicule automobile permettant la rotation de l'ouvrant autour d'un axe géométrique (X) transversal, l'ouvrant (10) comprenant une zone dite fragile (16) , apte à se rompre plus facilement que le reste de l'ouvrant (10), cette zone (16) s'étendant essentiellement sur toute la dimension transversale (L) de l'ouvrant (10), au moins partiellement dans une direction sensiblement parallèle à l'axe géométrique (X), **caractérisé en ce que** la zone fragile (16) est constituée par une jonction (36) de deux fronts de matière issus de deux sources (32) de matière plastique distinctes.

2. Ouvrant selon la revendication 1, dans lequel au moins une source de matière plastique est une alimentation d'injection.

3. Ouvrant selon la revendication 1 ou 2, dans lequel au moins une source de matière plastique est un flanc de matière (32) compressé.

4. Ouvrant selon l'une quelconque des revendications précédentes, réalisé en matière plastique renforcée de fibres.

5. Ouvrant selon les revendications 2 et 4, dans lequel la matière injectée est du BMC (Bulk Moulding Compound) ou du Polypropylène (PP) chargé de fibres.

6. Ouvrant selon les revendications 3 et 4, dans lequel la matière compressée est du SMC (Sheet Moulding Compound) ou du TRE (Thermoplastique Renforce Estampable).

7. Ouvrant selon l'une quelconque des revendications 1 à 6, dans lequel la zone fragile (16) s'étend dans la direction sensiblement parallèle à l'axe géométrique (X) essentiellement sur toute la dimension transversale (L) de l'ouvrant (10).

8. Ouvrant selon l'une quelconque des revendications 1 à 6, dans lequel la zone fragile (16) comprend au moins deux parties (22, 24) sensiblement rectilignes s'étendant dans deux directions formant un angle (Â) de valeur prédéterminée entre elles.

9. Ouvrant selon la revendication précédente, dans lequel la zone fragile comprend :
- une partie centrale (22), s'étendant dans la direction sensiblement parallèle à l'axe géométrique (X) ;
- deux parties latérales (24), agencées de sorte que la concavité de la zone fragile (16) soit tournée vers les moyens de solidarisation (12).

10. Ouvrant selon l'une quelconque des revendications 1 à 9, cet ouvrant constituant un couvre-capote.

11. Ouvrant selon l'une quelconque des revendications 1 à 9, cet ouvrant constituant une porte de coffre.

12. Ouvrant selon l'une quelconque des revendications 1 à 9, cet ouvrant constituant un hayon.

13. Ouvrant selon l'une quelconque des revendications 1 à 9, cet ouvrant un capot, en particulier un capot adapté pour absorber l'énergie due à un choc piétons.

14. Procédé de fabrication d'un ouvrant de véhicule automobile selon l'une quelconque des revendications précédentes, comportant des moyens de solidarisation (12) permettant la rotation de l'ouvrant autour d'un axe géométrique transversal (X), le procédé comportant :
- une étape d'insertion dans un moule (30) de deux flancs de matière (32) de forme prédéfinie ;
- une étape de compression du moule (30) de sorte que les flancs de matière (32) fluent,
- une étape de jonction des deux flancs de matière (32) liquide au moins partiellement dans une direction sensiblement parallèle à l'axe géométrique

## Claims

1. A motor vehicle door (10) made of molded plastics material, the door including connection means (12) for connecting the door (10) to a motor vehicle body in white, which connection means that enable the door to pivot about a transverse axis (X), the door (10) including a zone of "weakness" (16) suitable for breaking more easily than the remainder of the door (10), said zone (16) extending essentially over the entire transverse direction (L) of the door (10) at least in part in a direction that is substantially parallel to the axis (X), the door being **characterized in that** the zone of weakness (16) is constituted by a junction (36) between two fronts of material coming from two distinct sources (32) of plastics material.

2. A door according to claim 1, wherein at least one source of plastics material is an injection feed.

3. A door according to claim 1 or claim 2, wherein at least one source of plastics material is a panel of compressed material (32).

4. A door according to any preceding claim, made of fiber-reinforced plastics material.

5. A door according to claims 2 and 4, wherein the injected material is fiber-filled polypropylene (PP) or bulk molding compound (BMC).

6. A door according to claims 3 and 4, wherein the compressed material is sheet molding compound (SMC) or stampable reinforced thermoplastic (SRT).

7. A door according to any one of claims 1 to 6, wherein the zone of weakness (16) extends in the direction essentially parallel to the axis (X) essentially over the entire transverse dimension (L) of the door (10).

8. A door according to any one of claims 1 to 6, wherein the zone of weakness (16) includes at least two substantially rectilinear portions (22, 24) extending in two directions forming an angle (Â) of predetermined value between them.

9. A door according to the preceding claim, wherein the zone of weakness comprises:
· a central portion (22) extending in the direction substantially parallel to the axis (X); and
· two lateral portions (24) arranged so that the concave side of the zone of weakness (16) faces towards the connection means (12).

10. A door according to any one of claims 1 to 9, the door constituting a cover for a convertible top.

11. A door according to any one of claims 1 to 9, the door constituting a trunk door.

12. A door according to any one of claims 1 to 9, the door constituting a tailgate.

13. A door according to any one of claims 1 to 9, the door constituting a hood, in particular a hood adapted to absorb the energy due to a pedestrian impact.

14. A method of fabricating a motor vehicle door according to any preceding claim, the door including connection means (12) enabling it to pivot about a transverse axis (X), the method comprising:
· a step of inserting two panels (32) of material of predefined shape in a mold (30);
· a step of compressing the mold (30) such that the panels of material (32) creep; and
· a step of forming a junction between the two liquid panels of material (32), at least in part in a direction that is substantially parallel to the axis.

## Patentansprüche

1. Öffnungsanordnung (10) eines Kraftfahrzeugs aus Formkunststoff, die Mittel (12) zum festen Verbinden der Öffnungsanordnung (10) mit einer Kraftfahrzeug-Rohkarosserie aufweist, die das Drehen der Öffnungsanordnung um eine geometrische Querachse (X) erlauben, wobei die Öffnungsanordnung (10) einen so genannten Schwächungsbereich (16) aufweist, der Kräften leichter als der Rest der Öffnungsanordnung (10) nachgeben kann, wobei sich dieser Bereich (16) im Wesentlichen auf dem ganzen Quermaß (L) der Öffnungsanordnung (10) erstreckt, mindestens teilweise in einer Richtung im Wesentlichen parallel zu der geometrischen Achse (X), **dadurch gekennzeichnet, dass** der Schwächungsbereich (16) aus einer Verbindung (36) von zwei Materialfronten besteht, die aus zwei separaten Kunststoffquellen (32) stammen.

2. Öffnungsanordnung nach Anspruch 1, bei der mindestens eine Kunststoffquelle eine Spritzgussversorgung ist.

3. Öffnungsanordnung nach Anspruch 1 oder 2, bei der mindestens eine Kunststoffquelle eine Flanke (32) aus komprimiertem Material ist.

4. Öffnungsanordnung nach einem der vorhergehenden Ansprüche, die aus einem faserverstärkten Kunststoff hergestellt ist.

5. Öffnungsanordnung nach den Ansprüchen 2 und 4, bei der das Spritzgussmaterial BMC (Bulk Moulding Compound) oder Polypropylen (PP) mit Faserverstärkung ist.

6. Öffnungsanordnung nach den Ansprüchen 3 und 4, bei der das komprimierte Material SMC (Sheet Moulding Compound) oder TRE (Thermoplastique Renforce Estampable) ist.

7. Öffnungsanordnung nach einem der Ansprüche 1 bis 6, bei der sich der Schwächungsbereich (16) in der Richtung im Wesentlichen parallel zu der geometrischen Achse (X) im Wesentlichen auf dem gesamten Quermaß (L) der Öffnungsanordnung (10) erstreckt.

8. Öffnungsanordnung nach einem der Ansprüche 1 bis 6, bei der der Schwächungsbereich (16) mindestens zwei im Wesentlichen geradlinige Teile (22, 24) aufweist, die sich in zwei Richtungen, die mit einem vorbestimmten Wert miteinander einen Winkel (Â) bilden, erstrecken.

9. Öffnungsanordnung nach dem vorhergehenden Anspruch, bei der der Schwächungsbereich Folgendes aufweist:
- einen zentralen Teil (22), der sich in die Richtung im Wesentlichen parallel zu der geometrischen Achse (X) erstreckt;
- zwei seitliche Teile (24), die derart angeordnet sind, dass die Konkavität des Schwächungsbereichs (16) zu den Befestigungsmitteln (12) gerichtet ist.

10. Öffnungsanordnung nach einem der Ansprüche 1 bis 9, wobei diese Öffnungsanordnung eine Verdeckabdeckung bildet.

11. Öffnungsanordnung nach einem der Ansprüche 1 bis 9, wobei diese Öffnungsanordnung einen Kofferraumdeckel bildet.

12. Öffnungsanordnung nach einem der Ansprüche 1 bis 9, wobei diese Öffnungsanordnung eine Heckklappe bildet.

13. Öffnungsanordnung nach einem der Ansprüche 1 bis 9, wobei diese Öffnungsanordnung eine Motorhaube bildet, insbesondere eine Motorhaube, die die Energie, die durch einen Fußgängeraufprall entsteht, absorbieren kann.

14. Verfahren zum Herstellen einer Kraftfahrzeug-Öffnungsanordnung nach einem der vorhergehenden Ansprüche, die Mittel (12) zum festen Verbinden aufweist, die das Drehen der Öffnungsanordnung um eine geometrische Querachse (X) erlauben, wobei das Verfahren Folgendes aufweist:
- einen Schritt des Einfügens in eine Form (30) von zwei Materialflanken (32) mit vorbestimmter Form;
- einen Schritt des Komprimierens der Form (30) derart, dass die Materialflanken (32) fließen,
- einen Schritt des Verbindens der zwei Flanken (32) flüssigen Materials mindestens teilweise in einer Richtung im Wesentlichen parallel zu der geometrischen Achse.
